(19) Europäisches Patentamt

European Patent Office

Office européen des brevets

(11) **EP 2 761 430 B1**

(12) **EUROPEAN PATENT SPECIFICATION**

(45) Date of publication and mention of the grant of the patent:
**29.07.2015 Bulletin 2015/31**

(21) Application number: **11772863.4**

(22) Date of filing: **27.09.2011**

(51) Int Cl.:
***G06F 7/525*** (2006.01)

(86) International application number:
**PCT/AT2011/000397**

(87) International publication number:
**WO 2013/044276 (04.04.2013 Gazette 2013/14)**

(54) **MULTIPLICATION OF LARGE OPERANDS**

MULTIPLIKATION GROSSER OPERANDEN

MULTIPLICATION DE GRANDS OPÉRANDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.08.2014 Bulletin 2014/32**

(73) Proprietor: **Technische Universität Graz 8010 Graz (AT)**

(72) Inventors:
• **HUTTER, Michael**
  **A-8047 Graz (AT)**
• **WENGER, Erich**
  **A-8042 Graz (AT)**

(74) Representative: **Patentanwaltskanzlei Matschnig & Forsthuber OG Biberstrasse 22 Postfach 36 1010 Wien (AT)**

(56) References cited:
• **NILS GURA ET AL: "Comparing Elliptic Curve Cryptography and RSA on 8-bit CPUs", 8 July 2004 (2004-07-08), CRYPTOGRAPHIC HARDWARE AND EMBEDDED SYSTEMS - CHES 2004; [LECTURE NOTES IN COMPUTER SCIENCE;;LNCS], SPRINGER-VERLAG, BERLIN/ HEIDELBERG, PAGE(S) 119 - 132, XP019009389, ISBN: 978-3-540-22666-6 section 3.1-3.3, figure 1**
• **CHRISTIAN LEDERER ET AL: "Energy-Efficient Implementation of ECDH Key Exchange for Wireless Sensor Networks", 1 September 2009 (2009-09-01), INFORMATION SECURITY THEORY AND PRACTICE. SMART DEVICES, PERVASIVE SYSTEMS, AND UBIQUITOUS NETWORKS, SPRINGER BERLIN HEIDELBERG, BERLIN, HEIDELBERG, PAGE(S) 112 - 127, XP019127361, ISBN: 978-3-642-03943-0 section 3.2, figure 1**
• **LEIF UHSADEL ET AL: "Enabling Full-Size Public-Key Algorithms on 8-Bit Sensor Nodes", 2 July 2008 (2008-07-02), SECURITY AND PRIVACY IN AD-HOC AND SENSOR NETWORKS; [LECTURE NOTES IN COMPUTER SCIENCE], SPRINGER BERLIN HEIDELBERG, BERLIN, HEIDELBERG, PAGE(S) 73 - 86, XP019095864, ISBN: 978-3-540-73274-7 section 3.1, figure 4**

EP 2 761 430 B1

**Description**

Field of the invention and description of prior art

The invention relates to a method for performing a multiplication of two large operands (which represent numbers as multiplicands) such as large integer operands, and in particular to a method as described in the preamble part of claim 1. The invention also relates to a processing system for performing such a method according to the invention.

Multiplication of large numbers and specifically large integer numbers is one of the most important arithmetic operations in public-key cryptography. For instance, large-integer multiplication engrosses most of the resources and execution time of modern microprocessors, for instance up to 80 % for Elliptic Curve Cryptography (ECC) and RSA implementations. In order to increase the performance of multiplication, great effort has been put by researchers and developers to reduce the number of instructions or minimize the amount of memory-access operations.

A straightforward approach to multiplication, which corresponds to the schoolbook method of multiplying numbers, is called operand-scanning method. More efficient is the so-called Comba technique, which is widely used in practice. This method requires at least $2n^2$ load instructions for the multiplication of two integers of n words each, in order to process all operands and to calculate the necessary partial products. US 7,650,374 (Gura et al.) discloses a multiplication method, called hybrid multiplication, that combines the advantages of these methods. This method reduces the number of load instructions to only $2 \cdot cei1(n^2/d)$, with a parameter d which depends on the number of available registers of the underlying architecture. (In this disclosure, ceil(x) denotes the smallest integer value equal or greater than x.) US 7,650,374 reports a performance gain of about 25 % for the hybrid multiplication as compared to the classical Comba multiplication; the 160-bit implementation needs 3,106 clock cycles on an 8-bit ATmega128 microcontroller.

The major part of work in prior-art literature is based on the hybrid multiplication technique, which provides best performance on most microprocessors. A major improvement on the hybrid multiplication algorithm, which is the best reported implementation to date to the knowledge of the inventors, was reported by M. Scott & P. Szczechowiak ("Optimizing Multiprecision Multiplication for Public Key Cryptography", Cryptology ePrint Archive [http://eprint.iacr.org/], Report 2007/299, 2007). They introduced additional registers (so-called carry catchers) and could increase the performance to 2,651 clock cycles; it is worthwhile to note, however, that they fully unrolled the execution sequence to avoid additional clock cycles for loop instructions. In 2009, C. Lederer et al. ("Energy-Efficient Implementation of ECDH Key Exchange for Wireless Sensor Networks. In 3rd International Workshop in Information Security Theory and Practices - WISTP 2009, Brussels, Belgium, September 1-4, 2009, Vol. 5746 of LNCS, pp. 112-127. Springer, 2009) showed that the needed number of addition and move instructions can be reduced by simply rearranging the instructions during execution of the hybrid-multiplication method. Similar findings were recently, in 2010, described by Z. Liu et al. ("Efficient and Side-Channel Resistant RSA Implementation for 8-bit AVR Microcontrollers. In Workshop on the Security of the Internet of Things - SOCIOT 2010, 1st International Workshop, November 29, 2010, Tokyo, Japan. IEEE Computer Society, 2010) who reported the fastest looped version of the hybrid multiplication needing 2,865 clock cycles in total.

The present invention relates to a novel multiplication technique that reduces the number of needed load instructions to only $2n^2/e$, where e>d. We propose a new way to process the operands which allows efficient caching of required operands. In order to evaluate the performance, we use the ATmega128 microcontroller and compare the results with related work. For a 160-bit multiplication, 2,395 clock cycles are necessary, which is an improvement by 10% as compared to the implementation of M. Scott & P. Szczechowiak (*op. cit.*), which needs 2,651 clock cycles. In comparison to US 7,650,374 it is an improvement by about 23 %. The invention can be implemented with different sizes of integer numbers, and a comparison based on different integer sizes (such as 160, 192, 256, 512, 1,024, and 2,048) and register sizes (e = 2, 4, 8, 10, and 20) shows that the solution according to the invention needs about 15% less clock cycles for any chosen integer size. The method according to the invention also scales very well for different register sizes without significant loss of performance. Besides this, the method fully complies with common architectures that support multiply-accumulate instructions using a (Comba-like) triple-register accumulator or other multiple-word registers.

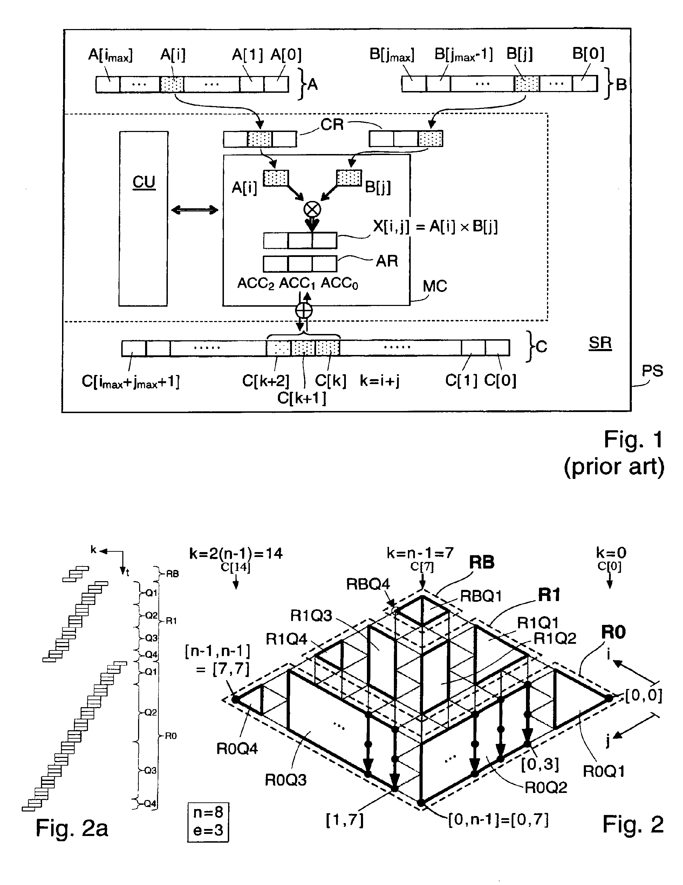

In Fig. 1 the general process of calculating the product of two large operands in a processing system PS of general kind is shown schematically; it also illustrates the notation used hereinafter. The two integers to be multiplied are denoted a and b, respectively; they are two m-bit large Integers that are represented as multiple-word array structures A = (A[n-1], ..., A[2], A[1], A[0]) and B = (B[n-1], ..., B[2], B[1], B[0]), respectively, held in a storage memory SR of the processing system PS. Further, W is the word size of the processor (e.g. 8, 16, 32, or 64 bits) and n = ceil(m/W) is the number of words required to represent each of the Integers a and b. The result of the multiplication is the integer c = ab, which is represented in a double-size word array C = (C[2n-1], ..., C[2], C[1], C[0]). The distinction between the integers a and b on one hand and the arrays A and B used to represent them on the other hand is usually dropped in the following, and likewise the distinction between the product number c and the array C representing it. Furthermore, the operands A and B discussed inhere primarily have the same length n, but in a more general case the operands A and B (or a and b) may have different sizes, $n_a$ = ceil($m_a$/W) and $n_b$ = ceil($m_b$/W), respectively, without affecting the principal operation of the invention.

Furthermore, an index notation is used for addressing the individual words in the arrays: operand indices i and j are used for the operands, with i running from 0 to a maximal value $i_{max}$ = n-1, and likewise j running from 0 to a maximal value jmax = n-1, wherein i and j are here used for indexing A[i] and B[j], respectively, but in a variant it is possible to exchange them mutually as well; a product index k is used for the result C, with k running from 0 to $i_{max}+j_{max}+1$ = 2n-1. The individual components A[i], B[j], C[k] of the arrays A, B, C are herein referred to as words, or segments (specifically, operand segments or product segments); often the operand segments are also simply called operands where this will not cause confusion. Generally, calculation of the product c = **a b** will require calculation of all "partial products" X[i, j]= A[i] x B[j] for all combinations of values of the indices i and j, i.e., all index pairs where the indices take the values i = 0...$i_{max}$ and j = 0...$j_{max}$. These calculations are, for instance, performed in a multiplication circuit MC of the processing system PS; for instance, the multiplication circuit may be a central processor unit of the system PS or a co-processor associated with a central processor unit and its operation is controlled by a control unit CU. For each of the partial products, the value of the k index affected by a partial product X[i, j]= A[i] $\times$ B[j] is the sum of the respective operand index values, k = i+j, and generally also the next value k+1 = i+j+1, as well as possibly additional consecutive index values depending on the amount of carry bits affected. Basically, the range in the result C affected by a partial product X[i, j] is two words wide, i.e., k and k+1; a third word will come about since the partial product X[i, j] will have to be added to an intermediate value of C[k = i+j], which may produce a carry to be stored in a third word. This is why the accumulator register AR of the multiplication circuit MC will advantageously have a three-word width; in Fig. 1 the three words of the accumulator register AR are labeled $ACC_0$, $ACC_1$, $ACC_2$. Furthermore, there are a number of caching registers CR for buffering selected operand segments and result segments for the calculations done with the multiplication circuit MC. Buffering of result segments in caching registers is not shown in Fig. 1 for better clarity, but will be understood. The result of an individual multiplication process, corresponding to a partial product X[i, j], may be stored directly into the accumulator words $ACC_0$, $ACC_1$ or into other registers (cf. Fig. 1), depending on the architecture of the system used.

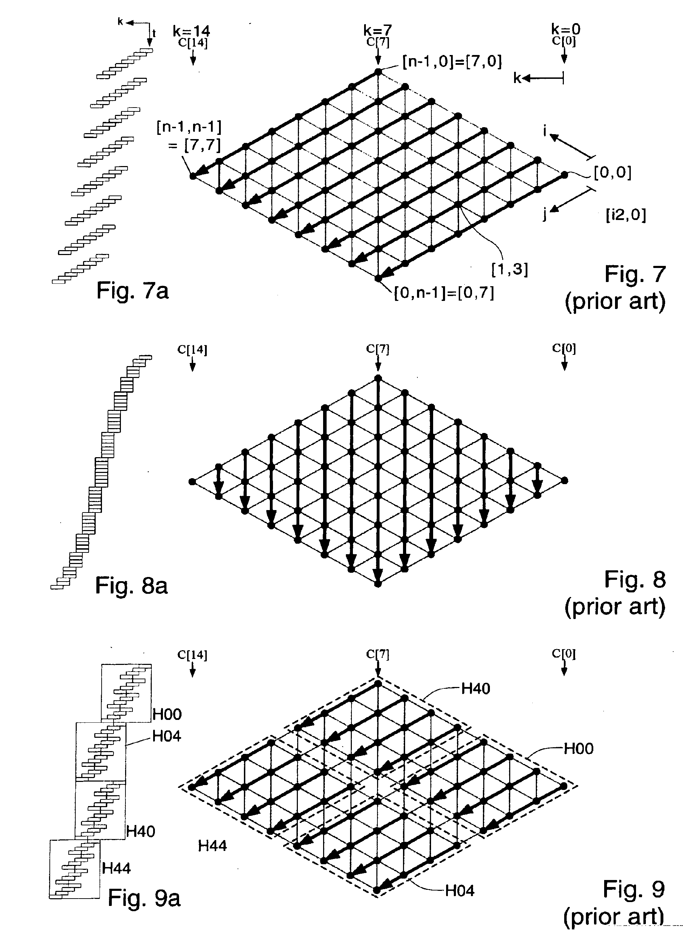

As a graphical representation for illustrating the order of calculating in the methods discussed here, a rhombus matrix representation is used in this disclosure as exemplified by Figs. 2 and 7 (in Fig. 7 with n = 8). A rhombus matrix shows the partial products X[i, j]= A[i] $\times$ B[j] which are collected to calculate the multiplication result C in a matrix arrangement order by the indices i, j. Each dot in a rhombus matrix represents one individual index pair [i, j], which stands for the processing of one partial product X[i, j] (in Fig. 7 as one example the index pair [1, 3] is indicated). for instance. Index pairs [i, j] of same value of index i are arranged in a straight slant line; the lines for constant index j run in a slant direction transversal to that of the i direction. The rhomboid arrangement of the matrix allows to show the index pairs [i, j] which belong to the same product index k = i+j in a vertical column which, therefore, corresponds to a segment of the result C with that index k (i.e., C[k]). The orientation is generally chosen such that the indices i, j, k increase from right to left, so index pair [0, 0] (which corresponds to X[0, 0] and product segment C[0]) is in the right-hand corner and the index pair with the highest values [n-1, n-1] corresponding with C[2(n-1)] is in the left-hand corner of the rhombus matrix.

Known common multiplication techniques, which are often used in practice, are the operand scanning, product scanning, and hybrid multiplication method. The methods differ in several ways how to process the operands. Consequently, they also exhibit significantly different amounts of load and store instructions necessary to perform the calculation. The mentioned three prior-art methods are discussed in the following with reference to Figs. 7 to 9a which show respective implementations for the multiplication of two 8-word integers, i.e., n = 8; the generalization to multiplication of other operands, in particular other values of n, is straightforward. The sequence of processing the partial products is indicated in Fig. 7 and other rhombus diagrams by means of strong arrow lines: each arrow lines marks a group of calculations which is done in immediate sequence, and after one group is finished, the processing continues with a next group (at the point at the start of an arrow line).

Figs. 7 and 7a illustrate the so-called operand-scanning method. This method is also referred to as schoolbook or row-wise multiplication method. The multiplication can be implemented using two nested loop operations. A first, outer loop loads the operand A[i] for each index i = 0, ..., n-1 (usually in ascending order, in particular where a product of numbers is calculated; otherwise descending order is possible as well) and keeps the value constant inside a second, inner loop of the algorithm. Within the inner loop, the multiplicand B[j] is loaded word by word and multiplied with the operand A[i]. The partial product X[i, j]= A[i] $\times$ B[j] is then added to the intermediate result of the column k= i+j which is usually buffered in a register or stored in data memory.

With reference to Fig. 7, the operand-scanning method processes the partial products from the upper-right side to the lower-left side of the rhombus, as indicated by arrow lines which each represent respective inner loops starting from j=0 with increasing index j. The algorithm starts from the loop for i=0, proceeding until the highest index pair [i, j]= [n-1, n-1] = [7, 7] is reached. In each group, n multiplications have to be performed. Furthermore, 2n load operations and n store operations are required to load the multiplicand and the intermediate result C[i+j] and to store the result C[i+j] $\leftarrow$ C[i+j] + X[i, j]. Thus, $3n^2+2n$ memory operations are necessary for the entire multi-precision multiplication. (In architectures that can maintain the intermediate result in available working registers ,this number decreases to $n^2+3n$.)

Fig. 7a illustrates the sequence of intermediate results processed in a diagram ('product sequence diagram' like also used in US 7,650,374). Each line of the product sequence diagram contains one box representing the two words of the partial product processed. The algorithm proceeds from line to line, so the vertical axis in the product sequence diagram roughly corresponds to time t, whereas the horizontal position denotes the index k.

Figs. 8 and 8a illustrate another way to perform a multi-precision multiplication which is commonly in use, namely, the so-called product-scanning method. This method is also referred to as Comba method or column-wise multiplication method. In the product-scanning method, the partial products are processed in a column-wise approach as illustrated by the arrow lines in Fig. 8. This has several advantages. First, since all operands of each column are multiplied and added consecutively, using a multiply-accumulate approach, a final value of the respective product segment is obtained at the end of each column. Therefore, no intermediate results (for C[i+j]) have to be stored or loaded throughout the algorithm. In addition, the handling of carry propagation is very easy because the carry can be simply added to the result of the next column using a simple register-copy operation. Moreover, only five working registers are needed to perform the multiplication: two registers for the operand and multiplicand and three registers for accumulation. For these reasons the product-scanning method is very suitable for low-resource devices with limited registers.

As will be clear from Fig. 8, by processing the partial products in a column-wise instead of a row-wise approach, only one store operation is needed to store the final value of the product segment at the end of a column. This particular virtue of the product-scanning method is evident from the product sequence diagram for the product-scanning method shown in Fig. 8a. For the entire multi-precision operation, 2n load operations are necessary to load the operands A[i] and B[j] and 2n store operations are needed to store the result. Therefore, $2n^2+2n$ memory operations are needed.

Figs. 9 and 9a illustrate a further commonly used method, the so-called hybrid multiplication method, which combines the operand-scanning and product-scanning methods in order to obtain the advantages of both. It can be implemented using two nested loop structures where the outer loop follows a product-scanning approach and the inner loop performs a multiplication according to the operand-scanning method. In the example of Figs. 9 and 9a the total area is divided into blocks H00, H04, H40, H44 of smaller rhombus shape of uniform size. The inner loop is done for each of the four blocks, and the outer loop processes the blocks by order of product index of the respective block (the product index is, for instance, the product index of the smallest index pair in the block), which in the present example is the sequence H00, H04, H40, H44 (or equivalently H00, H40, H04, H44). The basic idea of the hybrid method is to minimize the number of load instructions within the inner loop. For this, the accumulator has to be increased with regard to the number of register contained in it to a size of 2d+1 registers. The parameter d defines the number of rows within a processed block. The parameter d will be chosen such that 1 < d < n. Otherwise, the hybrid multiplication will coincide with the product-scanning method if the parameter d = 1, and it is equal to the operand-scanning method if d = n.

As can be seen from Fig. 9 with d = 4, all operands are processed line by line within one block according to the operand-scanning approach. Note that the blocks H00, H04, H40, H44 use operands with a very limited range of indices. Thus, several load instructions can be saved in cases where enough working registers are available. This will also become clear from the product sequence diagram of Fig. 9a. However, the outer loop of the hybrid method processes the blocks H00, H04, H40, H44 in a column-wise approach. So between two consecutive blocks no operands can be shared and all operands have to be loaded from memory again. For instance, blocks H04 and H40, which are executed next to each other, do not share any operands that possess the same indices. Therefore, after processing of block H04 is finished, several operands that had been loaded earlier for block H00 have to be loaded again for processing of block H40, which requires additional and unnecessary load instructions. However, in total, the hybrid method needs $2ceil(n^2/d)+2n$ memory access instructions which provides good performances on devices that feature a large register set.

A general drawback of known methods for performing a multiplication lies in the fact that they load the same operands not only once but several times throughout the algorithm; this results in additional clock cycles which could be avoided. Therefore, it is an aim of the present invention to provide a new multiplication technique that offers an improvement over existing solutions by efficiently reducing the load instructions.

Summary of the invention

The mentioned aim is achieved by a method according to the invention for performing a multiplication of two large operands on a processing system including a multiplication circuit with the following features. The method is performed on a multiplication circuit configured to calculate the product of a pair of word-wide operand inputs into a two-word-wide product result, where a word is a specified number of bits, wherein each of the operands is represented by a plurality of contiguous ordered word-wide operand segments (denoted as A[i], B[j]), each identified by means of a respective operand index (denoted i, j), and a result of the multiplication is represented by a plurality of contiguous ordered word-wide product segments (denoted C[k]) identified by means of a product index (k). Processing of partial products is done by multiplication of operand segments of one of the two operands and operand segments of the other of the two operands according to the steps of:

-   loading operand segments of the two operands corresponding to specific values of the operand indices into the multiplication circuit, with the exception of operand segments that are already held in registers of the multiplication circuit,

- performing a multiplication operation on the operand segments in the multiplication circuit to obtain a respective two-word-wide intermediate product, and
- updating product segments by adding the two-word-wide intermediate product to product segments which have a product index value equal to the sum of the operand index values of the operand segments as well as the next product index value, respectively;

wherein this processing of partial products is repeated for each value pair of the two operand indices according to a specified sequence. This sequence is composed of runs, such that each of said runs corresponds to a subset of the set of index value pairs, the subsets of different runs being disjoint, and the union of the runs preferably covering the complete set of index pair values. The step of updating product segments will, in the greater part of implementations, comprise the sub-steps of

- loading said product segments into an operand input of the circuit,
- adding the intermediate product to the operand input to obtain a sum result, and
- storing the sum result back to said product segments.

According to the invention, a number of caching registers is used in each run for caching operand segments of at least one of the operands. The caching registers are at least word-wide registers of the multiplication circuit. Each run comprises several parts, namely, an initial part, optionally one or more inner parts (but typically all runs comprise two inner parts respectively, with the possible exception of one residual run or "initialization block" which is a run without inner parts), and a final part, wherein each part is characterized by a parameter number which specifies the number of operand segments of one of the two operands being cached in caching registers and used for processing of partial products.

- In the initial part operand segments of a first of the two operands (either A or B) and at least one operand segment of the respective other operand are loaded into caching registers, partial products are processed for a number of product index values, wherein the number of partial products processed for each product index value increases from one to the parameter number of the initial part (this statement specifies the number of partial products processed, but does not prejudices the order of processing). At the end of the initial part, a number of first operand segments are left in caching registers, which number corresponds to the parameter number of the next part.
- In each inner part partial products are processed wherein for each product index value the same number of partial products is processed, which number corresponds to the parameter number of the respective part. All operand segments of one of the operands (either A or B) used for the partial products in the part are held in caching registers as a result of a respective preceding part, whereas at least one operand segment of the respective other operand (i.e., B or A, as the case may be) is loaded into the multiplication circuit, namely, for each product index processed in the part at least one operand segment. After processing of the partial products in the respective part, a number of operand segments of the respective other operand are left in caching registers, said number corresponding to the parameter number of the respective next part.
- In the final part partial products are processed for a number of product index values where the number of partial products processed for each product index value decreases from the parameter number of the final part to one (this statement specifies the number of partial products processed, but does not prejudices the order of processing). All operand segments of one of the operands used for the partial products in the final part are held in caching registers as a result of a respective preceding part.

This solution offers an improved multiplication technique usable with embedded microprocessors. The multiplication method reduces the number of necessary load instructions through a special arrangement of caching of operands. By implementing the product scanning approach but dividing the processing into several parts, the invention allows the scanning of sub-products where most of the operands are kept within the register-set throughout the algorithm. The invention leads to a considerable reduction of operations performed in the course of a multiplication of two operands; in a test implementation an improvement of the best reported solution by a factor of 10 % was found. In comparison to the hybrid multiplication of US 7,650,374 (Gura et al.), a speed gain up of 23% was achieved. An evaluation of the results further showed that the solution according to the invention scales very well for different Integer sizes used for ECC and RSA. For instance, an improvement of about 15 % for bit sizes between 256 and 2,048 bits was obtained as compared to a reference implementation of the hybrid multiplication.

The invention is particularly suitable for calculating products of integer numbers, but it will be clear to the person skilled in the art that it can be used for other applications as well, such as the multiplication of the significands (also called mantissa parts) of two floating-point numbers or multiplication of two binary polynomials.

In a suitable special case of the method according to the invention, partial products are processed according to a product-scanning multiplication method, namely, by grouping together operations for processing partial products which have the same product index values. This may be done in the inner parts and/or the initial and final parts of at least one run, preferably in the inner parts of each run (if it has an inner part). In other words, it may be advantageous to realize a method according to the invention such that within each run, partial products are processed in groups of same product index, and the product index between groups increases by an increment of one.

In a special realization of the method according to the invention at least one of the runs, preferably all runs but one, comprise at least two inner parts. Runs having (at least) two inner parts are also called "full runs"; the one remaining runs is a "residual run". For each full run, the parameter number of the initial part may be equal to the parameter number of the inner part and be greater by one than the parameter number of the final part. Moreover, in each full run, the same number of product index values may be processed within each inner part.

In particular the residual run may comprise only an initial and a final part, and then each other run may be a full run comprising an initial part, two inner parts, and a final part. In this configuration, the largest run is the last run. In the last run the number of product index values processed in an inner part may be equal to the number of operand segments in one of the operands reduced by the parameter number. Further, the other runs are suitably consecutively smaller than the last run. They precede the last run and have different part lengths as expressed by the number of product index values processed in an inner part of the respective full run, wherein part length of a full run is smaller than the part length of the respectively larger run (which immediately precedes the former) by the parameter number of the initial part of the run.

The width parameters of the residual run is typically not greater than the larger of the parameters of the initial and final parts of each of the full runs.

Furthermore, the earlier-mentioned aim can also be obtained by means of a processing system (or target platform) for performing a multiplication of two large operands, comprising a multiplication circuit configured to calculate the product of a pair of word-wide operand inputs into a two-word-wide product result as well as a number of caching registers, and further comprising a storage memory for storing a pair of operands and said product result, as well as a controlling unit configured to perform the method according to the invention with the multiplication circuit upon said pair of operands. Multiplication circuits of the mentioned kind are readily available. The controlling unit, may, for instance, be a CPU provided with instructions stored in a memory (which may be the mentioned storage memory or a separate instructions memory), where these instructions implement an algorithm to execute the method according to the invention. Also, the processing systems and/or multiplication circuits described in US 7,392,276 and US7,650,374 can easily be adapted by the person skilled in the art for implementing the methods discussed here so as to realize a processing system for performing the method according to the invention.

Brief description of the drawings

In the following, the present invention is illustrated in more detail by means of embodiments which represent exemplary, non-restrictive implementations which are also shown in the drawings. The drawings show:

Fig. 1    is a block diagram illustrating the general multiplication of two operands in order to obtain a product result another rhombus diagram of the implementation of Fig. 2, showing the composition of the rows,

Fig. 2    is a rhombus diagram illustrating a first embodiment of the invention, which is an implementation for 8-word operands with a uniform width parameter e = 3,

Fig. 2a    is a product sequence diagram for the implementation shown in Fig. 2,

Fig. 3    shows the structure of a row in the implementation for uniform width parameter e,

Fig. 4    illustrates the processing of partial products in parts R0Q2 and R0Q3 of the implementation shown in Fig. 2,

Fig. 5    shows a second embodiment with variable width parameter and varying orientation of the rows,

Fig. 6    shows another embodiment of the invention,

Fig. 7    is a rhombus diagram illustrating the operand-scanning method of prior art,

Fig. 7a    is a product sequence diagram for the method of Fig. 7,

Fig. 8    is a rhombus diagram illustrating the product-scanning method of prior art,

Fig. 8a    is a product sequence diagram for the method of Fig. 8,

Fig. 9    is a rhombus diagram illustrating the hybrid-multiplication method of prior art, and

Fig. 9a    is a product sequence diagram for the method of Fig. 9.

Detailed description of the invention and embodiments

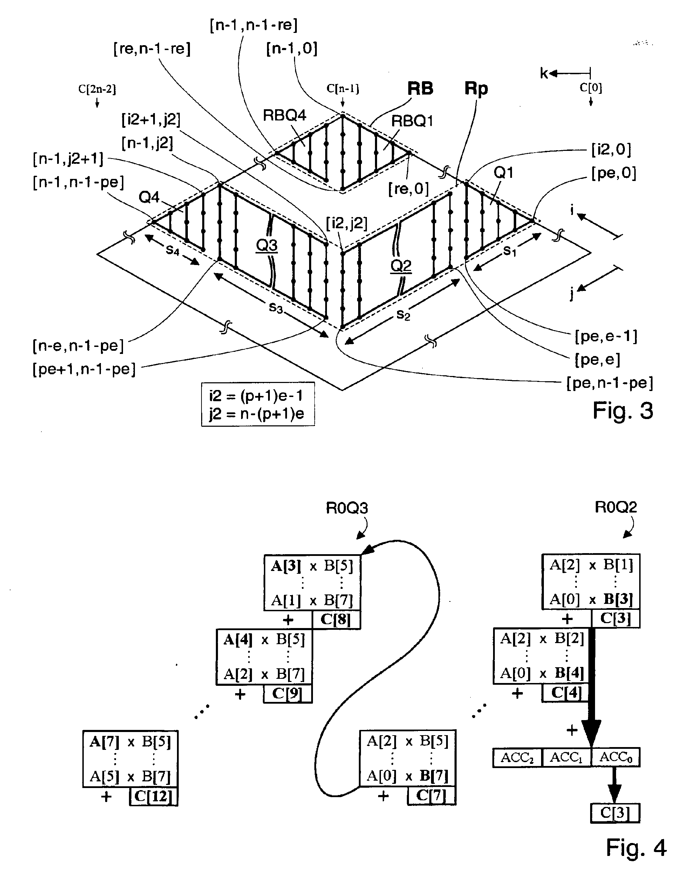

A principal idea of the invention is to use an efficient caching of operands in order to reduce the number of memory accesses to a minimum, and using a special order of the partial products to be calculated. The method according to the invention, also referred to as "operand-caching method", basically follows a known approach for calculating the partial products, and preferably the product-scanning approach, but divides the calculation into several regions of specific shape (with regard to the range of index pairs). Herein, these regions are referred to as "rows", and the process of operating through one of such rows is referred to as a "run". If the range of index pairs is visualized in a rhombus diagram, the rows generally have a bended shape, as is evident from e.g. Figs. 2 and 3.

The invention is based on the finding that by spending a certain amount of store operations, a significant amount of load instructions can be saved by reusing operands that have been already loaded in working registers.

The invention starts from the understanding that the product-scanning method provides best performance if all needed operands can be maintained in working registers of the multiplication circuit. In such a case, only $2n$ load instructions and $2n$ store instructions would be necessary. However, the required number of registers for operation is $2n+3$ (namely $2n$ registers for the operands and 3 registers for storing and accumulating the intermediate results), which is not available in most cases (namely, for typical values of $n$). The product-scanning method becomes inefficient if not enough registers are available, i.e., whenever the operand size is too large to cache a significant amount of operand segments. Hence, several load instructions are necessary to reload and overwrite the operands in registers. Therefore, the invention proposes a modified product-scanning method, in that the procedure of the product-scanning method is divided into several runs, each of which covers a corresponding row, plus a residual block as explained hereinafter.

**Operand-caching with uniform width parameter**

In a first exemplary embodiment of the invention, which is illustrated in the rhombus diagram of Fig. 2 (see above for an explanation of rhombus diagrams), the rows have a uniform width which is expressed as a parameter $e$. The number of rows is $r = \mathrm{ceil}(n/e)-1$. The value of the parameter $e$ is chosen in a way that all words needed for processing of the initial part of a row can be cached in the available working registers. A row index $p$ is used to index rows, with $p$ taking values from 0 up to $r-1$, and the symbol $R_p$ as abbreviation for the row associated with the row index $p$.

In this example it is assumed that the multiplication engine provides $f = 9$ available registers including a triple-word accumulator. Then the parameter can be chosen as $e = 3$ since $f = 9 = 2e+3$. Generally, when the multiplication engine provides $f$ registers including the triple-word accumulator, the parameter $e$ is chosen such that $2e+3 \leq f$. The generalization to other values of $e$, $n$, $f$ is evident for the person skilled in the art.

Figs. 2 and 2a show the structure of the calculating method for $n = 8$ and $e = 3$ in a rhombus diagram (not all index pair are shown as dots for better clarity) and pertinent product sequence diagram. In accordance with $e = 3$ , three registers are reserved to store three words of the operand **a** and three registers are reserved to store three words of operand **b.** Now, since $r = \mathrm{ceil}(8/3)-1 = 2$, the calculation is divided into two rows, referred to as R0 and R1 in Figs. 2 and 2a, as well as a "residual block" RB (in the upper corner of Fig. 2) which calculates the partial products which are not processed by the rows. Preferably the residual block RB is executed first, which is why it is also referred to as initialization block. Thus there are three runs in this example, one run for the residual block plus one run for each row. (More generally, there are $r+1$ runs.) Within each run, the order of calculation of the partial products is according to the product-scanning method, i.e., performing the partial products which belong to the same product index $k$ (where $k = i+j$ as defined above) in immediate order using a multiply-accumulate approach. In the rhombus diagram of Fig. 2, the product-scanning method is equivalent to a column-wise processing of the partial products within the region of the respective run.

Each row R0, R1 has an angled shape. The initialization block RB has a rhombus shape which covers index pairs $(i,j)$ with $i = re, ..., n-1$ and $j = 0, ..., E_B-1$ where $E_B = n-re$ is the maximal number of partial products belonging to one $k$ index (namely, for $k = n-1$) in the initialization block.

Referring to Fig. 3, the calculation of the rows is, for a general value of $n$, implemented as follows: each row $R_p$ is divided into four parts which are executed in consecutive order: Q1, Q2, Q3 and Q4. Herein, the following notation is used: Qq with $q = 1,2,3,4$ refers to any row in a calculation of a product; for specifying a specific part of a specific row the notation RpQq is used wherein $p$ and $q$ stands for the specific numbers of the row and part, respectively. In Fig. 3 the parameters of the initialization block RB and one row $R_p$ is given for a general case wherein $n$ and $e$ are parameters, $r = \mathrm{ceil}(n/e) -1$ (as defined above). The special case of Fig. 2 can be derived from the configuration shown in Fig. 3 with the values $n = 8$ and $e = 3$ (and $r = 2$) as already mentioned.

In the example illustrated in Figs. 2 and 3 all four parts Q1, Q2, Q3, Q4 of each row use the product-scanning approach in that all partial products of same product index $k$ (with $k = i+j$) that are processed within each part are executed in direct succession; no product of other index $k'$ is carried out in between. The initial part Q1 and the final part Q4 correspond to the first and second part of a classical product-scanning approach (of a respective triangle-shaped area in the rhombus diagram representation), whereas the inner parts Q2 and Q3 perform an efficient multiply-accumulate operation of already cached operands. In other implementations, the order of calculation within a part may deviate from a product-scanning sequence, depending on the individual application.

The algorithm starts with the calculation of the initialization block RB and then processes the individual rows R1, R0. For this, it starts from the smallest row (here, R1) and proceeds to the largest row; this is in Fig. 3 from the top to the bottom of the rhombus. Furthermore, all partial products are generated with increasing product index $k$, which is from right to left in Figs. 2 and 3. As a variant in implementations where not usual numbers are calculated, the partial products may also be calculated in a different order, such as generally decreasing product index k.

In the initialization block RB (which in Figs. 2 and 3 is shown in the upper-mid of the rhombus) performs the multiplication according to the classical product-scanning method. In the example of Fig. 3, the integer number of the longest sequence of multiplications (multi-precision multiplication) is $E_B$ = n-re = 2. This integer number is, by virtue of the definition of r, not greater than e (i.e., $E_B \leq e$). Because of this, all operands can be loaded and maintained within the available registers resulting in only $4E_B$ = 4(n-re) memory-access operations.

In the special case when $n \leq e$ (trivial case), only an initialization block RB is performed, skipping the following processing of rows. Otherwise, in the more usual case that n>e, the rows are processed: The rows are processed with a row index p decreasing from the largest possible value r-1, p = r-1, ..., 0. Each row consists of four parts Q1, Q2, Q3, Q4. For each part a "width parameter" $E_q$ (q = 1,2,3,4) is defined as the maximal number of partial products belonging to one k index within the respective block. Furthermore, for each part a "part length" $s_q$ can be defined which counts the number of product index values processed in this part. Thus, in the inner parts Q2, Q3, which have a parallelogram shape, the number of partial products processed is $E_q \cdot s_q$. In the example illustrated in Figs. 2, 3, and 5, the inner parts Q2, Q3 have equal part lengths $s_2 = s_3$, but in other implementations the part lengths may be different, in particular in cases where the two operands have different sizes.

An initial part Q1 starts with a product-scanning multiplication for what can be described as a half-rhombus. All operand segments for that row are first loaded into registers, i.e. A[i] with i = pe, ..., (p+1)e-1 and B[j] with j = 0, ..., e-1. The sum of all partial products X(i,j) = A[i] x B[j] for same product index k=i+j is then stored as intermediate result to the memory location of segements C[k] with k = pe, ..., (p+1)e-1 (this is the same index range as A[i]), plus a carry word (i.e., next higher word segment at index k+1) which corresponds to C[(p+1)e] and is buffered for the start of next part Q2. Consequently, 2e load instructions and e store instructions are needed. For the largest k value processed in this part Q1, e partial products are calculated, so $E_1$ = e; and $s_1$ = e (in compliance with the triangle shape of Q1).

The second part Q2 processes partial products in n-(p+1)e columns, where the columns correspond to product index k = (p+1)e, ... n-1. Thus, the part length $s_2$ = n-(p+1)e. For each index k, e partial products are processed ($E_2$ = e). Within this part Q2 a multiply-accumulate approach is employed which corresponds to a product-scanning approach restricted to the area of the part. Since all values of A[i] were loaded during the preceding initial part Q1 and are kept in caching registers, only one segment B[j] has to be loaded from one column to the next. The operand values A[i] are kept constant throughout the processing of part Q2. Beside the needed load instructions for B[j], it is also required to load and update the intermediate result of Q1 with the result obtained in Q2. Consequently, 2(n-(p+1)e) load and $s_2$ = n-(p+1)e store instructions are required for this second part. (In Fig. 3, the short-hands i2 = (p+1)e-1 and j2 = n-(p+1)e are used for the index values of the "inner knee point" [i2, j2] of Q2.)

The third part Q3 performs the same operations *mutatis mutandis* as described in the directly preceding part Q2 with exchanged roles of the operands: the already loaded operand segments B[j] with j = n-(p+1)e, ... (n-1)-pe are kept constant, and for each column one segment A[i] is loaded. Therefore, with this part the analogous considerations apply as with the preceding part Q3, *mutatis mutandis.* For each value of the product index k processed in Q3 (k = n, ..., 2n-1-(p+1)e) the number of partial products is e (i.e., $E_3$ = e), and the part length is $s_3$ = n-(p+1)e. Consequently, 2(n-(p+1)e) load and $s_3$ = n-(p+1)e store instructions are required for this third part Q3 as well.

Thus, each inner part Q2, Q3 can re-use cached operand words which are left from the preceding part (i.e., the initial part Q1 or preceding inner part Q2) without requiring load operations for that operand, and only words of the other operand are loaded for processing of partial products within the respective part.

The final part Q4 calculates the remaining partial products. In contrast to the preceding parts and in particular initial part Q1, no load instructions are required since all operands were loaded in the preceding part Q3 and are kept in caching registers. Hence, only e memory-access operations are needed to store the remaining words of the (intermediate) result C, at the locations of C[k] with k = 2n-(p+1)e, ..., (2n-1)-pe. It is worthwhile to note that here the last C[k] to be updated is at locations C[(2n-2)-pe] and C[(2n-1)-pe], wherein the latter is the segment which takes the carry word (next higher word segment at index k+1) of the last partial product processed at i = n-1 and j = (n-1)-pe. It is also remarked that the largest number of consecutive partial products calculated for one product index value k is only e-1 (namely, for the first k value) and the number of products decreases by one for each further index value. Therefore, the final part Q4 has width parameter $E_4$ = e-1, and its part length is $s_4$ = e-1 as well.

Fig. 4 illustrates the processing of partial products in parts R0Q2 and R0Q3 of row R0 (i.e., p=0). For each column, two load instructions are necessary (highlighted in boldface). All other operands are already loaded and cached in previous steps. Operands which are not required for further processing are overwritten by new operands. For instance, in part R0Q2 of Fig. 4, in the course of calculation of segment C[3], the value of operand segment B[1] is initially held in a caching register and is overwritten as it is supplanted by the value of B[3]; then the value B[2] in a caching register is overwritten by B[4]; and so on successively.

It is also remarked that the initialization block RB of the example illustrated in Figs. 2 and 3 can be interpreted as the union of an initial part RBQ1 and a final part RBQ4, where the initialization block is described by a parameter $E_B$

= n-re (in the example, $E_B$ = 8-2·3 = 2) in place of the otherwise uniform row parameter e of the rows R0, R1, and the width parameter of part RBQ1 is $E_1 = E_B$, while for part RBQ4, $E_4 = E_B$-1.

Table 1 summaries the memory-access complexity of the initialization block RB and the individual parts Q1, Q2, Q3, Q4 of a row p.

Table 1: Memory-access complexity for uniform parameter e (Fig. 3)

| Component | Load Instr. | Store Instr. | Total |
|---|---|---|---|
| RB | $2(n - re)$ | $2(n - re)$ | $4(n - re)$ |
| Q1 | $2e$ | $e$ | $3e$ |
| Q2 | $2(n - e(p + 1))$ | $n - e(p + 1)$ | $3(n - e(p + 1))$ |
| Q3 | $2(n - e(p + 1))$ | $n - e(p + 1)$ | $3(n - e(p + 1))$ |
| Q4 | 0 | $e$ | $e$ |

By summing up all load instructions, we get the total number $N_{load}$ of load instructions

$$N_{load} = 2(n-re) + \sum_{p=0}^{r-1} (4n - 4pe - 2e) = 2n + 4rn - 2er^2 - 2er \leq 2n^2/e$$

and the total number $N_{store}$ of store operations

$$N_{store} = 2(n-re) + \sum_{p=0}^{r-1} (2n - 2pe) = 2n + 2rn - er^2 - er \leq n + n^2/e .$$

Table 2 lists the complexity of different multi-precision multiplication techniques. It shows that the hybrid method needs $2ceil(n^2/d)$ load instructions whereas the operand-caching technique needs about $2n^2/e$ load instructions.

Table 2: Comparison of memory-access complexities of different multiplication techniques

| Method | Load Instructions | Store Instructions | Memory Instructions |
|---|---|---|---|
| Operand Scanning | $2n^2 + n$ | $n^2 + n$ | $3n^2 + 2n$ |
| Product Scanning | $2n^2$ | $2n$ | $2n^2 + 2n$ |
| Hybrid | $2\lceil n^2/d\rceil$ | $2n$ | $3\lceil n^2/d\rceil + 2n$ |
| **Operand Caching** | **$2n^2/e$** | **$n^2/e+n$** | **$3n^2/e+n$** |

Now, since the total number of available registers f equals to 2e+3 for the operand-caching technique (2e registers for the operand registers and three registers for the accumulator), whereas it is 3d+2 for the hybrid method (d+1 registers for the operands and 2d+1 registers for the accumulator), we have

$$2e+3 = 3d+2 \implies e = (3d-1)/2 \implies e > d .$$

A comparison of the total number of memory-access instructions for the hybrid and the operand-caching method, expressing both runtimes using f, gives

$$2n + 2ceil ( 3n^2/(f-2) ) > n + 6n^2/(f-3) .$$

Note that there are more parameters to consider. The number of additions of the operand-caching method is $3n^2$, and the number of additions of the hybrid method is $n^2(2+d/2)$ (upper bound). Also the pseudocode presented by Gura et al. (US 7,650,374) for the hybrid multiplication method is inefficient in the special case of n mod d = 0.

**Operand caching with variable width parameter**

In a general implementation of the method according to the invention, the width parameter E can be different from row to row, and can even vary within a row, namely, between parts.

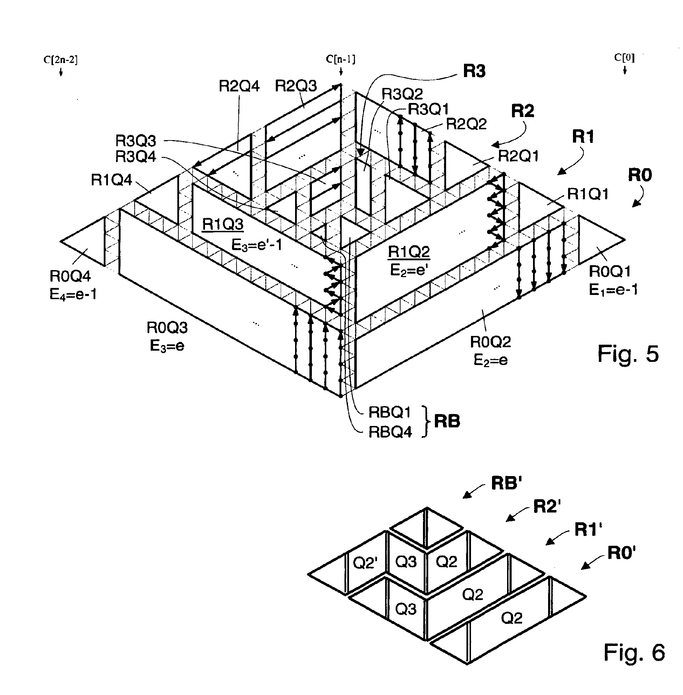

Fig. 5 shows an example where the last run R0 is composed of parts R0Q1, R0Q2, R0Q3, R0Q4 having respective width parameters $E_1 = e-1 = 4 = E_2$, $E_3 = e = 5$, and $E_4 = 4$; here, e can describe the maximal value of the width parameters. In the run R1, the width of parts R1Q1, R1Q2, R1Q3, R1Q4 is $E_1 = 4$, $E_2 = 5$, and $E_3 = E_4 = 4$. This demonstrates that the width parameter E can vary from part to part, with the decrement or increment being 1, but also greater values of the decrement/increments may be suitable in special cases. Also the maximal value e can vary between rows, for instance, the run R1 could have a value $e' \neq e$; as one prominent example, it should be noted that the width parameter of the initialization block, $E_B$, is generally different (mostly smaller) than the width parameter of other runs or parts.

Another possible variation is visible from the example of Fig. 5, namely, that the rows may have variable orientation in the [i, j] plane. Thus, the rows R2 and R3 are oriented "upward" rather than "downward" like rows R0 and R1. In other words, the roles of the operands A, B is exchanged for R2, R3 as compared to R0, R1. This is realized typically by exchanging the roles of parts Q2 and Q3, so parts R2Q2, R3Q2 are oriented like parts R0Q3, R1Q3; whereas parts R2Q3, R3Q3 are oriented like parts R0Q2, R1Q2. This does not affect the initial parts Q1 (R0Q1 to R3Q1) and final parts Q4 (R0Q4 to R3Q4), but should be considered in the arrangement of caching registers within the individual implementation. It is also worthwhile to mention that, in the case where rows of both orientations are present, the initialization block RB (if present) will generally be located in the middle of the rhombus, rather than at index pair locations near to the "lower" edge [0, n-1] or the "upper" edge [n-1, 0].

As already remarked, it is generally preferred within the invention that the sequence of processing the partial products within a part Q1, Q2, Q3, Q4 is according to the product-scanning method. However, depending on the architecture of the multiplication circuit used other approaches may be suitable in some or all of the parts constituting the rows. For instance, a zick-zack approach may be used as indicated for parts R1Q2 and R1Q3 of Fig. 5, based on a zick-zack multiplication procedure as disclosed in US 7,392,276 (Dupaquis et al.). Also the plain operand-scanning method may be suitable in special cases, in particular with some or all of the final or initial parts, as indicated in Fig. 5 for part R2Q4. The sequence of partial products within a group as represented by one of the arrow lines in Fig. 5 need not be uniform. The sequence can be chosen with increasing index i, as in parts R0Q2, R1Q2 of Fig. 5, or decreasing index i, as in parts R0Q3, R1Q3 of Fig. 5 (the index j will then decrease or increase, respectively, since k = i+j is constant within a group along a vertical arrow in Fig. 5). The index may also alternately increase and decrease, see part R2Q2. Analogous considerations apply for parts which embody a different approach from the product-scanning approach (cf. directions of arrows in parts R2Q4, R3Q3, R2Q3).

Moreover, it is remarked that the sequence of the parts in a row may be reversed with respect to the order of the index k; this may be particularly suitable in the case that the partial products are calculated with decreasing product index k. In such an implementation also the roles of the initial part Q1 and the final part Q4 within a row are exchanged: that is, then the initial part Q1 starts with the high values of index k, and the row ends in its final part Q4 at low values of index k.

In a further variant within the present invention, a row may have only one inner part or more than two inner parts (in addition to the respective initial and final parts). This is illustrated in the example of Fig. 6. This drawing shows a case where the two operands have different lengths, so the rhombus is asymmetric. First, a run R0' is processed which has only one inner part Q2, then the run RB having the configuration of an initialization part is done. Next a run R1' is done having two inner parts of different part lengths, whereas a last run R2' comprises three runs, which are designated Q2, Q3, and Q2' in Fig. 6, respectively. It is emphasized that a configuration including rows with one or more than three parts is not restricted to multiplication of operands of different lengths, but is possible for operands of same length as well.

**Evaluation of the method according to the invention**

Table 3, given at the end of the present description, shows a pseudo-code for an implementing algorithm for multi-precision multiplication using the operand-caching method according to the invention with uniform width parameter e as explained with reference to Fig. 3. Variables that are located in data memory are denoted by $M_x$ where x represents the Integer operand A and B or the result C. The parameter e describes the number of locally usable registers $R_A[e-1, ..., 0]$ and $R_B[e-1, ..., 0]$ for each operand. The triple-word accumulator is denoted by ACC, which is composed of $ACC_2$, $ACC_1$ and $ACC_0$.

An evaluation setup of the method discussed above with reference to Figs. 2 and 3 used the 8-bit ATmega128 microcontroller for evaluating the new multiplication technique. The ATmega128 is part of the megaAVR family from Atmel Corporation. It has been widely used in embedded systems, automotive environments, and sensor-node applications. The ATmega128 is based on a RISC architecture and provides 133 instructions. The maximum operating frequency is 16 MHz. The device features 128 kB of flash memory and 4 kB of internal SRAM. There exist 32 general-purpose registers (R0 to R31) of 8-bit size. Three 16-bit registers can be used for memory addressing, i.e. R26:R27, R28:R29, and R30:R31, which are denoted as X, Y, and Z. Note that the processor also allows pre-decrement and post-increment functionalities that can be used for efficient addressing of operands. The AT-mega128 further provides an hardware multiplier that performs an 8 x 8-bit multiplication within two clock cycles. The 16-bit result is stored in the registers R0 (lower word) and R1 (higher word).

The evaluation setup used register R22 to store a zero value; R23, R24, and R25 were reserved as accumulator registers. Thus, 20 registers, i.e. R2...R21, are available to be used to store and cache the words of the operands (i.e., e = 10 registers for each operand a and b). All implementations have been done by using a self-written code generator that allows the generation of (looped and unrolled) assembly code.

In order to demonstrate the performance of our method, several multiplication techniques were implemented, including also methods of prior art as described in the introductory part. For comparison reasons, a 160 x 160-bit multiplication was chosen as it has been done by most of the related work. The operand-scanning and product-scanning methods have been implemented without using all the available registers (as it usually would be implemented). For hybrid multiplication, d = 4 was applied because this allows a better optimization regarding necessary addition operations compared to a multiplication with d = 5. The carry propagation problem has been solved by implementing a similar approach as proposed by Z. Liu *et al.* (*op.cit.*). Thus, 200 MOVW instructions have been necessary to handle the carry propagation accordingly. For a fair comparison, all methods have been optimized for speed and provided unrolled instruction sequences. Furthermore, we implemented all accumulators as ring buffers to reduce necessary MOV instructions. After each partial-product generation, the indices of the accumulator registers are shifted so that no MOV instructions are necessary to copy the carry.

Best results have been obtained for the operand-caching technique according to the invention. By trading additional 20 store instructions, up to 120 load instructions could be saved as compared with the result with the best reference values, namely, the "hybrid method". Note that load, store, and multiply instructions on the ATmega128 are more expensive than other instructions since they require two clock cycles instead of only one. For operand-caching multiplication, almost the same amount of load and store instructions are required. In total 2,395 clock cycles were found to be needed to perform the multiplication with the setup implementation. Compared to the hybrid implementation, a speed improvement of about 18% was achieved. When taking into account different Integer sizes from 160 up to 2,048 bits a speed improvement of about 15 % could be achieved compared to the "hybrid method".

An investigation of how the performance depends upon the parameter e for different Integer sizes was also done. It is recalled that the parameter e is defined by the number of available registers to store words of one operand, i.e., $e = (f-3)/2$; $f = 2e + 3$ denotes the number of available registers in total (including the triple-size register for the accumulator). The results showed that for $e > 10$ no significant improvement in speed is obtained. As expected, the performance decreases for smaller e and higher Integer sizes. However, a comparison of the solution according to the invention (for a 160-bit multiplication with smallest parameter $e = 2$, corresponding to $f = 7$ registers) with the product-scanning method (needing $f = 5$ registers) revealed 3,915 clock cycles for the operand-caching method and 3,957 clock cycles for the product-scanning method. Thus, the invention provides a good performance even for a smaller set of available registers. For the special case $e = 20$, where all 20 words of one 160-bit operand can be maintained in registers (which is the ideal case for product scanning), it shows that the number of clock cycles reaches nearly the optimum of 2,160 clock cycles, i.e., $4n = 80$ memory-access instructions, $n^2 = 400$ multiplications, and $3n^2 = 1,200$ additions.

It is also worth to note that multiplication method according to the invention is well suitable for processors that support multiply-accumulate (MULACC) instructions such as ARM or the dsPIC family of microcontrollers. It also fully complies to architectures which support instruction-set extensions for MULACC operations.

Table 3: Pseudocode for operand-caching method (Figs. 2 and 3)

**Require:** word size $n$, parameter $e$, $n \geq e$, Integers $a, b \in [0, n), c \in [0, 2n)$.

**Ensure:** $c = ab$.

$r = \lfloor n/e \rfloor$.

$R_A[e - 1, \ldots, 0] \leftarrow M_A[n - 1, \ldots, re]$.

$R_B[e - 1, \ldots, 0] \leftarrow M_B[n - re - 1, \ldots, 0]$.

$ACC \leftarrow 0$.

**for** $i = 0$ **to** $n - re - 1$ **do**

  **for** $j = 0$ **to** $i$ **do**

    $ACC \leftarrow ACC + R_A[j] * R_B[i - j]$.

  **end for**

  $M_C[re + i] \leftarrow ACC_0$.

  $(ACC_1, ACC_0) \leftarrow (ACC_2, ACC_1)$.

  $ACC_2 \leftarrow 0$.

**end for**          **} RB**

**for** $i = 0$ **to** $n - re - 2$ **do**

  **for** $j = i + 1$ **to** $n - re - 1$ **do**

    $ACC \leftarrow ACC + R_A[j] * R_B[n - re - j + i]$.

  **end for**

  $M_C[n + i] \leftarrow ACC_0$.

  $(ACC_1, ACC_0) \leftarrow (ACC_2, ACC_1)$.

  $ACC_2 \leftarrow 0$.

**end for**

$M_C[2n - re - 1] \leftarrow ACC_0$.

$ACC_0 \leftarrow 0$.

**for** $p = r - 1$ **to** $0$ **do**          **} Row Loop:**

  $R_A[e - 1, \ldots, 0] \leftarrow M_A[(p + 1)e - 1, \ldots, pe]$.

  $R_B[e - 1, \ldots, 0] \leftarrow M_B[e - 1, \ldots, 0]$.

  **for** $i = 0$ **to** $e - 1$ **do**

    **for** $j = 0$ **to** $i$ **do**

      $ACC \leftarrow ACC + R_A[j] * R_B[i - j]$.

    **end for**

    $M_C[pe + i] \leftarrow ACC_0$.

    $(ACC_1, ACC_0) \leftarrow (ACC_2, ACC_1)$.

    $ACC_2 \leftarrow 0$.

  **end for**          **} Q1**

  **for** $i = 0$ **to** $n - (p + 1)e - 1$ **do**

    $R_B[e - 1, \ldots, 0] \leftarrow M_B[e + i], R_B[e - 2, \ldots, 1]$.

    **for** $j = 0$ **to** $e - 1$ **do**

      $ACC \leftarrow ACC + R_A[j] * R_B[e - 1 - j]$.

    **end for**

    $ACC \leftarrow ACC + M_C[(p + 1)e + i]$.

    $M_C[(p + 1)e + i] \leftarrow ACC_0$.

    $(ACC_1, ACC_0) \leftarrow (ACC_2, ACC_1)$.

    $ACC_2 \leftarrow 0$.          **} Q2**

  **end for**

$$\mathbf{for}\ i = 0\ \mathbf{to}\ n - (p+1)e - 1\ \mathbf{do}$$
$$R_A[e-1,\ldots,0] \leftarrow M_A[(p+1)e+i], R_A[e-2,\ldots,1].$$
$$\mathbf{for}\ j = 0\ \mathbf{to}\ e-1\ \mathbf{do}$$
$$ACC \leftarrow ACC + R_A[j] * R_B[e-1-j].$$
$$\mathbf{end\ for}$$
$$ACC \leftarrow ACC + M_C[(n+i].$$
$$M_C[n+i] \leftarrow ACC_0.$$
$$(ACC_1, ACC_0) \leftarrow (ACC_2, ACC_1).$$
$$ACC_2 \leftarrow 0.$$
$$\mathbf{end\ for}$$

$\left.\rule{0pt}{7em}\right\}$ **Q3**

$$\mathbf{for}\ i = 0\ \mathbf{to}\ e-2\ \mathbf{do}$$
$$\mathbf{for}\ j = i+1\ \mathbf{to}\ e-1\ \mathbf{do}$$
$$ACC \leftarrow ACC + R_A[j] * R_B[e-j+i].$$
$$\mathbf{end\ for}$$
$$M_C[2n - (p+1)e + i] \leftarrow ACC_0.$$
$$(ACC_1, ACC_0) \leftarrow (ACC_2, ACC_1).$$
$$ACC_2 \leftarrow 0.$$
$$\mathbf{end\ for}$$
$$M_C[2n - 1 - pe] \leftarrow ACC_0.$$
$$ACC_0 \leftarrow 0.$$
$$\mathbf{end\ for}$$
$$\mathbf{Return}\ c.$$

$\left.\rule{0pt}{7em}\right\}$ **Q4**

## Claims

1. A method for performing a multiplication of two large operands (a, b) on a processing system with a multiplication circuit (MC), said multiplication circuit configured to calculate the product of a pair of word-wide operand inputs into a two-word-wide product result, where a word is a specified number of bits, wherein each of the operands (a, b) is represented by a plurality of contiguous ordered word-wide operand segments (A[i], B[j]), each identified by means of a respective operand index (i, j), and a result (c) of the multiplication is represented by a plurality of contiguous ordered word-wide product segments (C[k]) identified by means of a product index (k),
the method comprising processing of partial products by multiplication of operand segments of one of the two operands and operand segments of the other of the two operands according to the steps of:

   - loading operand segments of the two operands corresponding to specific values of the operand indices (i, j) into the multiplication circuit, with the exception of operand segments that are already held in registers of the multiplication circuit,
   - performing a multiplication operation on the operand segments in the multiplication circuit to obtain a respective two-word-wide intermediate product (X[i, j]), and
   - updating product segments by adding the two-word-wide intermediate product to product segments (C[k]) which have a product index value equal to the sum of the operand index values of the operand segments as well as the next product index value, respectively;

   wherein said processing of partial products is repeated for each value pair ([i, j]) of the two operand indices according to a specified sequence which is composed of runs (Rp, RB, R0', R1', R2'), each of said runs corresponding to a subset of the set of index value pairs, the subsets of different runs being disjoint, and
   a number (e) of caching registers (CR) is used in each run for caching operand segments of at least one of the operands, said caching registers being at least word-wide registers of the multiplication circuit,
   **characterized in that**
   each run comprises several parts (Q1, Q2, Q3, Q4), wherein each part is **characterized by** a parameter number (Eq) which specifies the number of operand segments of one of the two operands being cached in caching registers and used for processing of partial products, wherein the parts are consecutively:

- an initial part (Q1) in which:

operand segments of a first of the two operands and at least one operand segment of the respective other operand are loaded into caching registers,

partial products are processed for a number of product index values (k), wherein the number of partial products processed for each product index value increases from one to the parameter number ($E_1$) of the initial part, and

at the end of the initial part, a number (e) of first operand segments are left in caching registers, which number corresponds to the parameter number ($E_2$, $E_4$) of the next part;

- optionally one or more inner parts (Q2, Q3) wherein in each inner part:

partial products are processed wherein for each product index value the same number of partial products is processed, which number corresponds to the parameter number ($E_2$, $E_3$) of the respective part, wherein all operand segments of one of the operands used for the partial products in the part are held in caching registers as a result of a respective preceding part, whereas at least one operand segment of the respective other operand is loaded into the multiplication circuit, namely, for each product index processed in the part at least one operand segment, and

after processing of the partial products in the respective part, a number of operand segments of the respective other operand are left in caching registers, said number corresponding to the parameter number of the respective next part (Q3, Q4); and

- a final part (Q4) in which partial products are processed for a number of product index values (k) where the number of partial products processed for each product index value decreases from the parameter number ($E_4$) of the final part to one, and wherein all operand segments of one of the operands used for the partial products in the final part are held in caching registers as a result of a respective preceding part; wherein at least one of the runs (R0, R1) comprises at least one inner part (Q2, Q3).

2.  The method of claim 1, wherein at least in the inner parts (Q2, Q3) of at least one run, partial products are processed according to a product-scanning multiplication method, namely, by grouping together operations for processing partial products which have the same product index values (k).

3.  The method of claim 1 or 2, wherein at least one of the runs (Rp, R0, R1), preferably all runs but one, comprise at least two inner parts (Q2, Q3).

4.  The method of claim 3, wherein for each run comprising at least two inner parts, the parameter number ($E_1$) of the initial part (Q1) equals the parameter number ($E_2$, $E_3$) of the inner part (Q2, Q3) and is greater by one as the parameter number ($E_4$) of the final part (Q4).

5.  The method of claim 4, wherein in each run comprising at least two inner parts, the number of product index values (k) processed within each inner part (Q2, Q3) is the same.

6.  The method of any of the foregoing claims, wherein one run is a residual run (RB), which comprises only an initial and a final part, and each other run is a full run (R0, R1) which comprises an initial part, two inner parts, and a final part.

7.  The method of claim 6, comprising a last run (R0), which is a full run in which the number of product index values (k) processed in an inner part equals the number of operand segments in one of the operands reduced by the parameter number, and whenever at least one further full run (R1) is present, they precede the last run (R0), wherein the full runs have different part lengths ($s_2$, $s_3$), which lengths are expressed by the number of product index values (k) processed in an inner part of the respective full run, wherein for said at least one further full run the part length of the run is smaller than the part length of the respectively larger run by the parameter number of the initial part of the run.

8.  The method of claim 6 or 7, wherein the larger of the parameters of the initial and final part (RBQ1, RBQ4) of the residual run (RB) is a number which is not greater than the larger of the parameters of the initial (Q1) and final part (Q4) of each of the full runs.

9. The method of any of the foregoing claims, wherein the step of updating product segments comprises

   - loading said product segments into an operand input of the circuit,
   - adding the intermediate product to the operand input to obtain a sum result, and
   - storing the sum result back to said product segments.

10. The method of any of the foregoing claims, wherein within each run, partial products are processed in groups of same product index (k), and the product index between groups increases by an increment of one.

11. Processing system for performing a multiplication of two large operands (a, b), comprising a multiplication circuit (MC) configured to calculate the product of a pair of word-wide operand inputs into a two-word-wide product result as well as a number of caching registers (CR), a storage memory (SR) for storing a pair of operands and said product result, as well as a controlling unit (CU) configured to perform the method according to any of the foregoing claims with the multiplication circuit upon said pair of operands.

**Patentansprüche**

1. Verfahren zum Ausführen einer Multiplikation zweier großer Operanden (a, b) auf einem Verarbeitungssystem mit einem Multiplikator-Schaltkreis (MC), welcher dazu eingerichtet ist, das Produkt aus einem Paar von Eingangs-Operanden von Wort-Größe zu einem Ergebnisprodukt von Doppelwort-Größe zu berechnen, wobei ein Wort eine festgelegte Anzahl von Bits ist, wobei jeder der Operanden (a, b) durch eine Vielzahl zusammenhängend geordneter Operandensegmente (A[i], B[j]) von Wort-Größe dargestellt ist, von denen jedes mittels jeweiliger Operandenindices (i, j) identifiziert wird, und ein Ergebnis (c) der Multiplikation durch eine Vielzahl zusammenhängend geordneter Produktsegmente (C[k]) von Wort-Größe dargestellt ist, die über einen Produktindex (k) identifiziert werden, wobei das Verfahren die Verarbeitung von Teilprodukten durch Multiplikation von Operandensegmenten eines der beiden Operanden mit Operandensegmenten des anderen der beiden Operanden gemäß folgenden Schritten umfasst:

   - Laden von Operandensegmenten der beiden Operanden gemäß spezifischen Werten der Operandenindices (i, j) in den Multiplikator-Schaltkreis, mit Ausnahme von Operandensegmenten, die bereits in Registern des Multiplikator-Schaltkreises stehen,
   - Ausführen eines Multiplikationsganges mit den Operandensegmenten in dem Multiplikator-Schaltkreis, wodurch ein zugehörendes Zwischenprodukt (X[i, j]) von Doppelwort-Größe erhalten wird, und
   - Fortschreiben von Produktsegmenten durch Addieren des Zwischenprodukts von Doppelwort-Größe zu Produktsegmenten (C[k]) mit jeweils einem Wert des Produktindex gleich der Summe der Werte der Operandenindices der Operandensegmente sowie des nachfolgenden Werts des Produktindex;

   wobei die Verarbeitung von Teilprodukten für jedes Wertepaar ([i, j]) der beiden Operandenindices gemäß einer vorgegebenen Abfolge wiederholt wird, die aus Durchgängen (Rp, RB, R0', R1', R2') besteht, wobei jeder der Durchgänge einer Teilmenge der Menge von Index-Wertepaaren mit zueinander disjunkten Teilmengen der verschiedenen Durchgänge entspricht, und
   eine Anzahl (e) von Cache-Registern (CR) in jedem Durchgang zum Cache-Puffern von Operandensegmenten zumindest eines der Operanden verwendet wird, wobei die Cache-Register Register des Multiplikator-Schaltkreises von zumindest Wort-Größe sind,
   **dadurch gekennzeichnet, dass**
   jeder Durchgang mehrere Teile (Q1, Q2, Q3, Q4) umfasst, wobei jeder Teil durch einen Parameterwert ($E_q$) gekennzeichnet ist, der die Anzahl der Operandensegmente eines der beiden Operanden angibt, die in Cache-Registern gepuffert sind und für die Verarbeitung von Teilprodukten verwendet werden,
   wobei die Teile nacheinander sind:

   - ein Anfangsteil (Q1) worin:

     Operandensegmente eines ersten der beiden Operanden und zumindest ein Operandensegment des jeweils anderen Operanden in Cache-Register geladen werden,
     Teilprodukte für eine Anzahl von Werten des Produktindex (k) verarbeitet werden, wobei die Anzahl der Teilprodukte, die für jeden Wert des Produktindex verarbeitet werden, von eins bis zum Parameterwert ($E_1$) des Anfangsteils ansteigt, und

am Ende des Anfangsteils eine Anzahl (e) erster Operandensegmente in Cache-Registern verbleiben, wobei diese Anzahl dem Parameterwert ($E_2$, $E_4$) des nächsten Teils entspricht;

- gegebenenfalls ein oder mehrere Innenteil(e) (Q2, Q3), wobei in jedem Innenteil:

Teilprodukte verarbeitet werden, wobei für jeden Wert des Produktindex die gleiche Anzahl von Teilprodukten verarbeitet wird, wobei diese Anzahl dem Parameterwert ($E_2$, $E_3$) des jeweiligen Teils entspricht, wobei alle für Teilprodukte in dem Teil verwendeten Operandensegmente eines der Operanden infolge des jeweils vorangehenden Teils in Cache-Registern stehen, aber zumindest ein Operandensegment des jeweils anderen Operanden in den Multiplikator-Schaltkreis geladen wird, nämlich für jeden in dem Teil bearbeiteten Produktindex zumindest ein Operandensegment, und
nach der Verarbeitung der Teilprodukte in dem jeweiligen Teil eine Anzahl von Operandensegmenten des jeweils anderen Operanden in Cache-Registern verbleibt, wobei diese Anzahl dem Parameterwert des jeweils nächsten Teils (Q3, Q4) entspricht;
und

- ein Schlussteil (Q4), in dem Teilprodukte für eine Anzahl von Werten des Produktindex (k) verarbeitet werden, wobei die Anzahl der für jeden Wert des Produktindex verarbeiteten Teilprodukte von dem Parameterwert ($E_4$) des Schlussteils auf eins abnimmt, und wobei alle Operandensegmente eines der Operanden, die im Schlussteil für die Teilprodukte verwendet werden, infolge eines jeweils vorangehenden Teils in Cache-Registern stehen;

wobei zumindest einer der Durchgänge (R0, R1) zumindest einen Innenteil (Q2, Q3) umfasst.

2. Verfahren nach Anspruch 1, bei welchem zumindest in den Innenteilen (Q2, Q3) zumindest eines Durchgangs Teilprodukte gemäß einem Multiplikationsverfahren gemäß Produkt-Scanning verarbeitet werden, nämlich durch Zusammenfassen von Arbeitsgängen zum Verarbeiten von Teilprodukten mit gleichem Wert des Produktindex (k).

3. Verfahren nach Anspruch 1 oder 2, bei welchem zumindest einer der Durchgänge (Rp, R0, R1), vorzugsweise alle Durchgänge außer einem, zumindest zwei Innenteile (Q2, Q3) umfasst.

4. Verfahren nach Anspruch 3, bei welchem für jeden Durchgang, der zumindest zwei Innenteile umfasst, der Parameterwert ($E_1$) des Anfangsteils (Q1) dem Parameterwert ($E_2$, $E_3$) der Innenteile (Q2, Q3) gleich ist und um eins größer ist als der Parameterwert ($E_4$) des Schlussteils (Q4).

5. Verfahren nach Anspruch 4, bei welchem in jedem Durchgang, der zumindest zwei Innenteile umfasst, in jedem Innenteil (Q2, Q3) die gleiche Anzahl von Werten des Produktindex (k) bearbeitet wird.

6. Verfahren nach einem der vorhergehenden Ansprüche, bei welchem einer der Durchgänge (RB) ein Rest-Durchgang ist, der nur einen Anfangsteil und einen Schlussteil umfasst, und jeder andere Durchgang ein voller Durchgang ist (R0, R1), der einen Anfangsteil, zwei Innenteile und einen Schlussteil umfasst.

7. Verfahren nach Anspruch 6, mit einem letzten Durchgang (R0), der ein voller Durchgang ist, in welchem die Anzahl der in einem Innenteil bearbeiteten Werte des Produktindex (k) gleich ist der um den Parameterwert verringerte Anzahl von Operandensegmenten in einem der Operanden, und immer, wenn zumindest ein weiterer voller Durchgang vorliegt, dieser dem letzten Durchgang (R0) vorangeht, wobei die vollen Durchgänge verschiedene Teillängen (s2, s3) haben, welche Längen durch die Anzahl der in einem Innenteil des jeweiligen vollen Durchgangs bearbeiteten Werte des Produktindex (k) ausgedrückt sind, wobei für den zumindest einen weiteren vollen Durchgang die Teillänge desselben um den Parameterwert des Anfangsteils des Durchgangs kleiner ist als die Teillänge des jeweils größeren Durchgangs.

8. Verfahren nach Anspruch 6 oder 7, bei welchem der größere der Parameter des Anfangs- und des Schlussteils (RBQ1, RBQ4) des Rest-Durchlaufs (RB) eine Zahl ist, die nicht größer ist als der größere der Parameter des Anfangs- (Q1) und Schlussteils (Q4) sämtlicher voller Durchgänge.

9. Verfahren nach einem der vorhergehenden Ansprüche, bei welchem der Schritt des Fortschreibens der Produktsegmente umfasst:

- Laden der Produktsegmente in einen Eingangs-Operanden des Schaltkreises,

- Addieren des Zwischenprodukts zum Eingangs-Operanden, wodurch ein Summenergebnis erhalten wird, und
- Speichern des Summenergebnisses zurück in die Produktsegmente.

10. Verfahren nach einem der vorhergehenden Ansprüche, bei welchem in jedem Durchlauf Teilprodukte in Gruppen von gleichem Produktindex (k) verarbeitet werden und der Produktindex zwischen den Gruppen um jeweils eins zunimmt.

11. Verarbeitungssystem zum Ausführen einer Multiplikation zweier großer Operanden (a, b), mit einem Multiplikator-Schaltkreis (MC), welcher dazu eingerichtet ist, das Produkt aus einem Paar von Eingangs-Operanden von Wort-Größe zu einem Ergebnisprodukt von Doppelwort-Größe zu berechnen, sowie einer Anzahl von Cache-Registern (CR), einem Speicher (SR) zum Speichern eines Paares von Operanden und des Ergebnisprodukts, sowie einer Steuereinheit (CU), die dazu eingerichtet ist, mit dem Multiplikator-Schaltkreis das Verfahren nach einem der vorhergehenden Ansprüche auf das Paar von Operanden auszuführen.

**Revendications**

1. Procédé pour effectuer une multiplication de deux grands opérandes (a, b) dans un système de traitement par un circuit de multiplication (MC), ledit circuit de multiplication étant configuré pour calculer le produit d'une paire d'entrées d'opérande de la largeur d'un mot et obtenir un résultat de produit de la largeur de deux mots, où un mot est un nombre de bits spécifié, dans lequel chacun des opérandes (a, b) est représenté par une pluralité de segments d'opérande de la largeur d'un mot ordonnés contigus (A[i], B[j]), chacun étant identifié au moyen d'un indice d'opérande (i, j) respectif, et un résultat (C) de la multiplication est représenté par une pluralité de segments de produit de la largeur d'un mot ordonnés contigus (C[k]) identifiés au moyen d'un indice de produit (k),

le procédé comprenant le traitement de produits partiels par une multiplication de segments d'opérande de l'un des deux opérandes et de segments d'opérande de l'autre des deux opérandes conformément aux étapes :

- de chargement de segments d'opérande des deux opérandes correspondant à des valeurs spécifiques des indices d'opérande (i, j) dans le circuit de multiplication, à l'exception des segments d'opérande qui sont déjà conservés dans des registres du circuit de multiplication,
- d'exécution d'une opération de multiplication sur les segments d'opérande dans le circuit de multiplication pour obtenir un produit intermédiaire de la largeur de deux mots (X[i, j]) respectif, et
- de mise à jour des segments de produit en ajoutant le produit intermédiaire de la largeur de deux mots aux segments de produit (C[k]) qui ont une valeur d'indice de produit égal à la somme des valeurs d'indice d'opérande des segments d'opérande ainsi que la valeur d'indice de produit suivante, respectivement ;

dans lequel ledit traitement de produits partiels est répété pour chaque paire de valeurs ([i, j]) des deux indices d'opérande conformément à une séquence spécifiée qui est composée de phases d'exécution (Rp, RB, R0', R1', R2'), chacune desdites phases d'exécution correspondant à un sous-ensemble de l'ensemble de paires de valeurs d'indice, les sous-ensembles de différentes phases d'exécution étant disjoints, et

un nombre (e) de registres de mémoire cache (CR) sont utilisés dans chaque phase d'exécution pour la mise en mémoire cache des segments d'opérande d'au moins l'un des opérandes, lesdits registres de mémoire cache étant des registres de la largeur d'au moins un mot du circuit de multiplication,

**caractérisé en ce que**

chaque phase d'exécution comprend plusieurs parties (Q1, Q2, Q3, Q4), dans lequel chaque partie est **caractérisée par** un nombre de paramètre (Eq) qui spécifie le nombre de segments d'opérande de l'un des deux opérandes qui sont en mémoire cache dans des registres de mémoire cache et utilisés pour le traitement de produits partiels, dans lequel les parties sont consécutivement :

- une partie initiale (Q1) dans laquelle :

des segments d'opérande d'un premier des deux opérandes et au moins un segment d'opérande de l'autre opérande respectif sont chargés dans des registres de mémoire cache,

des produits partiels sont traités pour un nombre de valeurs d'indice de produit (k), dans lequel le nombre de produits partiels traités pour chaque valeur d'indice de produit augmente de un au nombre de paramètre ($E_1$) de la partie initiale, et

à la fin de la partie initiale, un nombre (e) de premiers segments d'opérande sont laissés dans des registres de mémoire cache, lequel nombre correspond au nombre de paramètre ($E_2$, $E_4$) de la partie suivante ;

- en option, une ou plusieurs parties internes (Q2, Q3), dans lequel, dans chaque partie interne :

des produits partiels sont traités, dans lequel, pour chaque valeur d'indice de produit, le même nombre de produits partiels sont traités, lequel nombre correspond au nombre de paramètre ($E_2$, $E_3$) de la partie respective, dans lequel tous les segments d'opérande de l'un des opérandes utilisés pour les produits partiels dans la partie sont conservés dans des registres de mémoire cache en tant que résultat d'une partie précédente respective, tandis qu'au moins un segment d'opérande de l'autre opérande respectif est chargé dans le circuit de multiplication, à savoir, pour chaque indice de produit traité dans la partie au moins un segment d'opérande, et

après le traitement des produits partiels dans la partie respective, un nombre de segments d'opérande de l'autre opérande respectif sont laissés dans des registres de mémoire cache, ledit nombre correspondant au nombre de paramètre de la partie suivante (Q3, Q4) respective ;

et

- une partie finale (Q4) dans laquelle les produits partiels sont traités pour un nombre de valeurs d'indice de produit (k) où le nombre de produits partiels traités pour chaque valeur d'indice de produit diminue du nombre de paramètre ($E_4$) de la partie finale à un, et dans lequel tous les segments d'opérande de l'un des opérandes utilisés pour les produits partiels dans la partie finale sont conservés dans des registres de mémoire cache en tant que résultat d'une partie précédente respective ;

dans lequel au moins l'une des phases d'exécution (R0, R1) comprend au moins une partie interne (Q2, Q3).

2. Procédé selon la revendication 1, dans lequel, au moins dans les parties internes (Q2, Q3) d'au moins une phase d'exécution, des produits partiels sont traités selon un procédé de multiplication par balayage de produit, à savoir, en regroupant les opérations pour le traitement des produits partiels qui ont les mêmes valeurs d'indice de produit (k).

3. Procédé selon la revendication 1 ou 2, dans lequel au moins l'une des phases d'exécution (Rp, R0, R1), de préférence toutes les phases d'exécution sauf une, comprennent au moins deux parties internes (Q2, Q3).

4. Procédé selon la revendication 3, dans lequel, pour chaque phase d'exécution comprenant au moins deux parties internes, le nombre de paramètre ($E_1$) de la partie initiale (Q1) est égal au nombre de paramètre ($E_2$, $E_3$) de la partie interne (Q2, Q3) et est plus grand de un que le nombre de paramètre ($E_4$) de la partie finale (Q4).

5. Procédé selon la revendication 4, dans lequel, dans chaque phase d'exécution comprenant au moins deux parties internes, le nombre de valeurs d'indice de produit (k) traitées dans chaque partie interne (Q2, Q3) est le même.

6. Procédé selon l'une quelconque des revendications précédentes, dans lequel une phase d'exécution est une phase d'exécution résiduelle (RB), qui ne comprend qu'une partie initiale et une partie finale, et chaque autre phase d'exécution est une phase d'exécution complète (R0, R1) qui comprend une partie initiale, deux parties internes et une partie finale.

7. Procédé selon la revendication 6, comprenant une dernière phase d'exécution (R0), qui est une phase d'exécution complète dans laquelle le nombre de valeurs d'indice de produit (k) traitées dans une partie interne est égal au nombre de segments d'opérande dans l'un des opérandes réduit du nombre de paramètre, et à chaque fois qu'au moins une autre phase d'exécution complète (R1) est présente, elles précèdent la dernière phase d'exécution (R0), dans lequel les phases d'exécution complètes ont différentes longueurs de partie ($s_2$, $s_3$), lesquelles longueurs sont exprimées par le nombre de valeurs d'indice de produit (k) traitées dans une partie interne de la phase d'exécution complète respective, dans lequel, pour ladite au moins une autre phase d'exécution complète, la longueur de partie de la phase d'exécution est inférieure à la longueur de partie de la phase d'exécution respectivement plus grande du nombre de paramètre de la partie initiale de la phase d'exécution.

8. Procédé selon la revendication 6 ou 7, dans lequel le plus grand des paramètres des parties initiale et finale (RBQ1, RBQ4) de la phase d'exécution résiduelle (RB) est un nombre qui n'est pas supérieur au plus grand des paramètres des parties initiale (Q1) et finale (Q4) de chacune des phases d'exécution complètes.

9. Procédé selon l'une quelconque des revendications précédentes, dans lequel l'étape de mise à jour des segments de produit comprend :

- le chargement desdits segments de produit dans une entrée d'opérande du circuit,
- l'ajout du produit intermédiaire à l'entrée d'opérande pour obtenir un résultat de somme, et

- la mémorisation du résultat de somme de retour dans lesdits segments de produit.

10. Procédé selon l'une quelconque des revendications précédentes, dans lequel, dans chaque phase d'exécution, les produits partiels sont traités dans des groupes de même indice de produit (k), et l'indice de produit entre les groupes augmente d'un incrément de un.

11. Système de traitement pour l'exécution d'une multiplication de deux grands opérandes (a, b), comprenant un circuit de multiplication (MC) configuré pour calculer le produit d'une paire d'entrées d'opérande de la largeur d'un mot et obtenir un résultat de produit de la largeur de deux mots, ainsi qu'un certain de registres de mémoire cache (CR), une mémoire de mémorisation (SR) pour mémoriser une paire d'opérandes et ledit résultat de produit, ainsi qu'une unité de commande (CU) configurée pour effectuer le procédé selon l'une quelconque des revendications précédentes avec le circuit de multiplication sur ladite paire d'opérandes.

Fig. 1
(prior art)

$A[i_{max}]$  $A[i]$  $A[1]$ $A[0]$  $B[j_{max}]$  $B[j_{max}-1]$  $B[j]$  $B[0]$

CR

CU

$A[i]$  $B[j]$

$\otimes$

$X[i,j] = A[i] \times B[j]$

AR

$ACC_2$ $ACC_1$ $ACC_0$  MC

$\oplus$

C  SR

$C[i_{max}+j_{max}+1]$  $C[k+2]$  $C[k]$  $k=i+j$  $C[1]$ $C[0]$

$C[k+1]$

PS

Fig. 2a

Fig. 2

$n=8$
$e=3$

$k=2(n-1)=14$
$C[14]$

$k=n-1=7$
$C[7]$  RB

$k=0$
$C[0]$

RBQ4  RBQ1

R1Q3  R1

R1Q4  R1Q1
R1Q2

$[n-1,n-1]$
$= [7,7]$

R0

$[0,0]$

R0Q4

R0Q3

R0Q1

$[0,3]$

R0Q2

$[1,7]$  $[0,n-1]=[0,7]$

20

i2 = (p+1)e-1
j2 = n-(p+1)e

Fig. 3

Fig. 4

C[2n-2]    C[n-1]    C[0]

R2Q4    R2Q3    R3    

R3Q2
R3Q1    R2Q2    R2

R3Q3    R2Q1    R1
R3Q4

R1Q4    R0

R1Q1    R0

$\underline{R1Q3}$
$E_3 = e' - 1$

$\underline{R1Q2}$
$E_2 = e'$

R0Q4    R0Q1
$E_4 = e - 1$    $E_1 = e - 1$

R0Q3    R0Q2
$E_3 = e$    $E_2 = e$

Fig. 5

RBQ1 } RB
RBQ4 }

RB'
R2'
R1'
R0'

Q2'    Q3    Q2

Q3    Q2

Fig. 6

Fig. 7a

Fig. 7
(prior art)

Fig. 8a

Fig. 8
(prior art)

Fig. 9a

Fig. 9
(prior art)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7650374 B, Gura

- US 7392276 B

### Non-patent literature cited in the description

- **M. SCOTT ; P. SZCZECHOWIAK.** Optimizing Multiprecision Multiplication for Public Key Cryptography. *Cryptology ePrint Archive,* 2007, http://eprint.iacr.org
- Energy-Efficient Implementation of ECDH Key Exchange for Wireless Sensor Networks. **C. LEDERER et al.** 3rd International Workshop in Information Security Theory and Practices - WISTP 2009, Brussels, Belgium. Springer, 01 September 2009, vol. 5746, 112-127

- Efficient and Side-Channel Resistant RSA Implementation for 8-bit AVR Microcontrollers. **Z. LIU et al.** Workshop on the Security of the Internet of Things - SOCIOT 2010, 1st International Workshop. IEEE Computer Society, 29 November 2010